# EUROPÄISCHE PATENTANMELDUNG

(11) **EP 3 079 148 A1**
(43) Veröffentlichungstag der Anmeldung: **12.10.2016**
(21) Anmeldenummer: 16020088.7
(22) Anmeldetag: 21.03.2016
(51) Int. Cl.: G09G 5/22, G09G 5/16

(54) **VERFAHREN ZUM BEREITSTELLEN VON ANZEIGEDATEN ALS KLARTEXT IN MEHREREN SPRACHEN UND SCHRIFTSYSTEMEN MITTELS EINER ANZEIGEEINRICHTUNG EINES HAUSHALTSGERÄTES**

(30) Priorität: 09.04.2015 DE 102015105398
(71) Anmelder: Miele & Cie. KG, 33332 Gütersloh (DE)
(72) Erfinder: Brinkemper, Klaus, 33378 Rheda-Wiedenbrück (DE); Kröhnert, Ralf, 33613 Bielefeld (DE)

(57) **Zusammenfassung**

Die Erfindung betrifft ein Verfahren (600) zum Bereitstellen von Anzeigedaten zum Anzeigen von Klartext in mehreren Sprachen und Schriftsystemen mittels einer Anzeigeeinrichtung eines Haushaltsgerätes. Hierbei weist das Verfahren (600) einen Schritt (610) des Vorverarbeitens anzuzeigender Textdaten bezüglich zumindest einer sprachabhängigen und schriftsystemabhängigen Darstellungseigenschaft auf, um vorverarbeitete Textdaten zu erzeugen. Auch weist das Verfahren (600) einen Schritt (620) des Filterns eines Zeichensatzes in Abhängigkeit von den vorverarbeiteten Textdaten auf, um einen Zeichenvorrat auf eine zum Anzeigen der vorverarbeiteten Textdaten ausreichende Teilmenge des Zeichenvorrats zu reduzieren. Ferner weist das Verfahren (600) einen Schritt (630) des Übertragens der vorverarbeiteten Textdaten und der Teilmenge des Zeichenvorrats als Anzeigedaten an eine Speichereinrichtung des Haushaltsgerätes auf.

## Beschreibung

Die Erfindung betrifft ein Verfahren zum Bereitstellen von Anzeigedaten zum Anzeigen von Klartext in mehreren Sprachen und Schriftsystemen mittels einer Anzeigeeinrichtung eines Haushaltsgerätes, ein Verfahren zum Ansteuern einer Anzeigeeinrichtung eines Haushaltsgerätes zum Anzeigen von Klartext in mehreren Sprachen und Schriftsystemen, eine entsprechende Vorrichtung, ein Haushaltsgerät und ein entsprechendes Computerprogramm.

Haushaltsgeräte mit Klartext-Anzeigen für Länder, die sich komplexer Schriftsysteme bedienen (z.B. Leserichtung von rechts nach links), sind kaum verfügbar oder bieten dem Nutzer eine Sprachenvielfalt nur auf Basis europäischer Sprachen (z.B. englisch) an.

Die DE 198 30 844 A1 offenbart eine Steuerungsanordnung für ein programmgesteuertes Haushaltsgerät mit Landesprogrammlisten.

Der Erfindung stellt sich die Aufgabe, ein verbessertes Verfahren zum Bereitstellen von Anzeigedaten zum Anzeigen von Klartext in mehreren Sprachen und Schriftsystemen mittels einer Anzeigeeinrichtung eines Haushaltsgerätes, ein verbessertes Verfahren zum Ansteuern einer Anzeigeeinrichtung eines Haushaltsgerätes zum Anzeigen von Klartext in mehreren Sprachen und Schriftsystemen, eine verbesserte Vorrichtung, ein verbessertes Haushaltsgerät und ein verbessertes Computerprogramm bereitzustellen.

Erfindungsgemäß wird diese Aufgabe durch ein Verfahren zum Bereitstellen von Anzeigedaten zum Anzeigen von Klartext in mehreren Sprachen und Schriftsystemen mittels einer Anzeigeeinrichtung eines Haushaltsgerätes, ein Verfahren zum Ansteuern einer Anzeigeeinrichtung eines Haushaltsgerätes zum Anzeigen von Klartext in mehreren Sprachen und Schriftsystemen, eine entsprechende Vorrichtung, ein Haushaltsgerät und ein entsprechendes Computerprogramm mit den Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer unaufwendigen Darstellung komplexer Schriftsysteme in Haushaltsgeräten mit Klartext-Anzeigen insbesondere auch darin, einen Speicherbedarf zu reduzieren oder zu minimieren. Somit kann beispielsweise eine Integration komplexer Schriftsysteme selbst in kleine Systeme mit Mikrocontrollern und begrenztem Speicher, wie sie typischerweise in Haushaltsgeräten vorzufinden sind, überhaupt ermöglicht werden. Auf diese Weise können insbesondere Nutzern auch eine vorteilhafte Geräte-Bedienung auf Klartext-Basis in ihrer Muttersprache sowie eine Nutzung hoch entwickelter Funktionen, wie Automatik-Programme oder Hilfen zur Wäschepflege, die bei Geräten mit Klartext-Anzeigen möglich sind, geboten werden.

Es wird ein Verfahren zum Bereitstellen von Anzeigedaten zum Anzeigen von Klartext in mehreren Sprachen und Schriftsystemen mittels einer Anzeigeeinrichtung eines Haushaltsgerätes vorgestellt, wobei das Verfahren folgende Schritte aufweist:
Vorverarbeiten anzuzeigender Textdaten bezüglich zumindest einer sprachabhängigen und schriftsystemabhängigen Darstellungseigenschaft, um vorverarbeitete Textdaten zu erzeugen;
Filtern eines Zeichensatzes in Abhängigkeit von den vorverarbeiteten Textdaten, um einen Zeichenvorrat auf eine zum Anzeigen der vorverarbeiteten Textdaten ausreichende Teilmenge des Zeichenvorrats zu reduzieren; und
Übertragen der vorverarbeiteten Textdaten und der Teilmenge des Zeichenvorrats als Anzeigedaten an eine Speichereinrichtung des Haushaltsgerätes.

Dieses Verfahren kann beispielsweise in Software oder Hardware oder in einer Mischform aus Software und Hardware beispielsweise in einer Vorrichtung implementiert sein. Das Verfahren zum Bereitstellen kann insbesondere vor einer durch einen Nutzer oder eine andere Person durchgeführten Inbetriebnahme des Haushaltsgerätes ausgeführt werden.

Gemäß einer Ausführungsform können im Schritt des Vorverarbeitens die anzuzeigenden Textdaten bezüglich einer bidirektionalen Darstellung, bezüglich einer umgebungsabhängigen Ausformung und zusätzlich oder alternativ bezüglich einer Ausbildung kombinierter Zeichen und Ligaturen untersucht werden. Eine solche Ausführungsform bietet den Vorteil, dass ein Speicherbedarf für die Textdaten sowie ein Verarbeitungsaufwand für eine Klartext-Anzeige selbst in komplexen Sprachen gesenkt werden können.

Auch kann das Verfahren einen Schritt des Analysierens der vorverarbeiteten Textdaten aufweisen, um zumindest eine Filterregel zum Filtern des Zeichensatzes zu bestimmen. Eine solche Ausführungsform bietet den Vorteil, dass somit eine Menge an zu speichernden Zeichen minimiert werden kann, wobei anzuzeigende Texte mit den korrekten Zeichen zuverlässig wiedergegeben werden können.

Ferner wird ein Verfahren zum Ansteuern einer Anzeigeeinrichtung eines Haushaltsgerätes zum Anzeigen von Klartext in mehreren Sprachen und Schriftsystemen vorgestellt, wobei das Verfahren folgende Schritte aufweist:
Empfangen eines Sprachsignals, also ein Signal, das die Gewählte Sprache angibt und somit eine anzuzeigende Sprache für die Anzeigedaten repräsentiert;
Einlesen von Anzeigedaten, die gemäß einer Ausführungsform des vorstehend genannten Verfahrens bereitgestellte Anzeigedaten repräsentieren;
Generieren eines Anzeigedatensatzes unter Verwendung der Anzeigedaten in Abhängigkeit von sprachabhängigen und schriftsystemabhängigen Positionen von Anzeigeinhalten ansprechend auf das Sprachsignal; und
Ausgeben des generierten Anzeigedatensatzes an eine Schnittstelle zu der Anzeigeeinrichtung, um die Anzeigeeinrichtung anzusteuern.

Dieses Verfahren kann beispielsweise in Software oder Hardware oder in einer Mischform aus Software und Hardware beispielsweise in einer Vorrichtung implementiert sein. Das Verfahren zum Ansteuern kann nach einer Inbetriebnahme des Haushaltsgerätes ausgeführt werden. Dabei können bei dem Verfahren zum Ansteuern Anzeigedaten verwendet werden, die durch Ausführen einer Ausführungsform des vorstehend genannten Verfahrens zum Bereitstellen bereitgestellt sind. Die Anzeigeinhalte können zumindest eine Teilmenge der Anzeigedaten repräsentieren und zusätzlich oder alternativ aufweisen.

Gemäß einer Ausführungsform können im Schritt des Generierens die sprachabhängigen und schriftsystemabhängigen Positionen von Anzeigeinhalten unter Verwendung einer Verarbeitungsvorschrift ermittelt werden, die abhängig von einer dem Sprachsignal zugeordneten Attributsinformation anwendbar ist. Eine solche Ausführungsform bietet den Vorteil, dass ein Verarbeitungsaufwand sowie ein Speicherbedarf gesenkt oder minimiert werden können, da zur Realisierung sprachabhängiger und schriftsystemabhängiger Anordnungen der Anzeigeinhalte der Einsatz einer einheitlichen Verarbeitungsvorschrift genügt.

Auch kann im Schritt des Generierens abhängig von dem Sprachsignal eine Leserichtung für Anzeigeinhalte festgestellt werden. Hierbei können die sprachabhängigen und schriftsystemabhängigen Positionen von Anzeigeinhalten abhängig von der Leserichtung als Vorgabepositionen, als gespiegelte Positionen und zusätzlich oder alternativ als Sonderpositionen ermittelt werden. Eine solche Ausführungsform bietet den Vorteil, dass die Klartext-Anzeige auf schnelle und einfache Weise realisiert werden kann, wobei lediglich eine Fallunterscheidung von Leserichtungen durchgeführt zu werden braucht.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Zudem wird ein Haushaltsgerät vorgestellt, das eine Anzeigeeinrichtung zum Anzeigen von Klartext in mehreren Sprachen und Schriftsystemen und eine Ausführungsform der vorstehend genannten Vorrichtung aufweist, wobei die Anzeigeeinrichtung und die Vorrichtung datenübertragungsfähig miteinander verbunden sind.

Die Anzeigeeinrichtung kann getrennt von der Vorrichtung angeordnet sein. Alternativ kann die Vorrichtung als ein Teil der Anzeigeeinrichtung ausgeführt sein. Anders ausgedrückt können die Vorrichtung und die Anzeigeeinrichtung integriert ausgeführt sein. Auch kann das Haushaltsgerät eine Speichereinrichtung aufweisen. Die Speichereinrichtung kann getrennt von der Vorrichtung und zusätzlich oder alternativ getrennt von der Anzeigeeinrichtung angeordnet sein. Alternativ kann die Speichereinrichtung als ein Teil der Anzeigeeinrichtung oder der Vorrichtung ausgeführt sein.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Darstellung eines Haushaltsgerätes mit einer Vorrichtung gemäß einem Ausführungsbeispiel der vorliegenden Erfindung;
- Figur 2: eine Klartextanzeige eines Haushaltsgerätes gemäß einem Ausführungsbeispiel der vorliegenden Erfindung in einer ersten Sprache;
- Figur 3: eine Klartextanzeige eines Haushaltsgerätes gemäß einem Ausführungsbeispiel der vorliegenden Erfindung in einer zweiten Sprache;
- Figur 4: ein Ablaufschema eines Vorverarbeitungsprozesses gemäß einem Ausführungsbeispiel der vorliegenden Erfindung;
- Figur 5: ein Ablaufschema eines Anzeigevorbereitungsprozesses gemäß einem Ausführungsbeispiel der vorliegenden Erfindung;
- Figur 6: ein Ablaufdiagramm eines Verfahrens zum Bereitstellen gemäß einem Ausführungsbeispiel der vorliegenden Erfindung; und
- Figur 7: ein Ablaufdiagramm eines Verfahrens zum Ansteuern gemäß einem Ausführungsbeispiel der vorliegenden Erfindung.

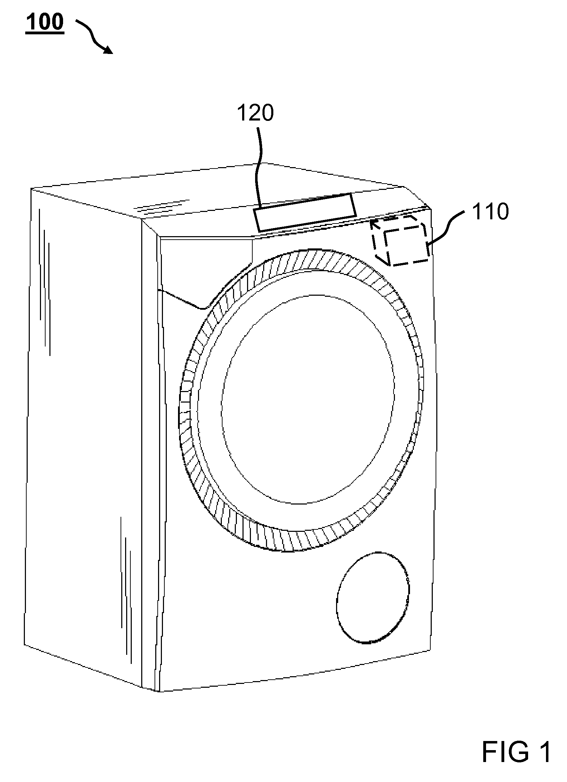

Figur 1 zeigt eine schematische Darstellung eines Haushaltsgerätes 100 mit einer Vorrichtung 110 zum Bereitstellen von Anzeigedaten zum Anzeigen von Klartext in mehreren Sprachen und Schriftsystemen gemäß einem Ausführungsbeispiel der vorliegenden Erfindung. Das Haushaltsgerät 100 weist neben der Vorrichtung 110 eine Anzeigeeinrichtung 120 auf. Das Haushaltsgerät 100 ist lediglich beispielhaft als eine Waschmaschine oder ein Wäschetrockner ausgeführt.

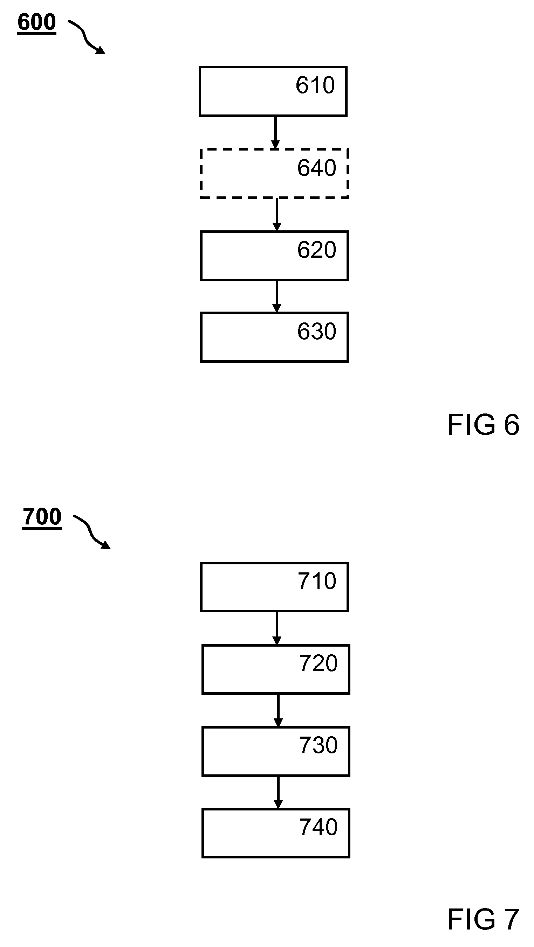

Die Vorrichtung 110 ist innerhalb eines Gehäuses des Haushaltsgerätes 100 angeordnet. Die Anzeigevorrichtung 120 ist an einer für einen Nutzer des Haushaltsgeräts 100 einsehbaren Position angeordnet. Die Anzeigevorrichtung 120 ist ausgebildet, um Klartext in mehreren Sprachen und Schriftsystemen anzuzeigen. Zum Bereitstellen der Anzeigedaten ist die Vorrichtung 110 ausgebildet, um ein Verfahren zum Ansteuern der Anzeigeeinrichtung 120 zum Anzeigen von Klartext in mehreren Sprachen und Schriftsystemen auszuführen. Hierbei ist die Vorrichtung 110 insbesondere ausgebildet, um ein Verfahren wie das in Figur 7 dargestellte Verfahren zum Ansteuern auszuführen. Somit kann die Vorrichtung 110 auch als Ansteuervorrichtung oder Steuervorrichtung bezeichnet werden.

Die Anzeigeeinrichtung 120 und die Vorrichtung 110 sind als separate Bauelemente ausgeführt, die datenübertragungsfähig miteinander verbunden sind. Alternativ kann die Vorrichtung 110 als ein Teil der Anzeigeeinrichtung 120 ausgeführt sein. Das Haushaltsgerät 100 weist ferner eine Speichereinrichtung zum Speichern von Anzeigedaten auf. Eine solche Speichereinrichtung kann getrennt von der Vorrichtung 110 und/oder der Anzeigeeinrichtung 120 angeordnet oder alternativ als ein Teil der Anzeigeeinrichtung 120 oder der Vorrichtung 110 ausgeführt sein.

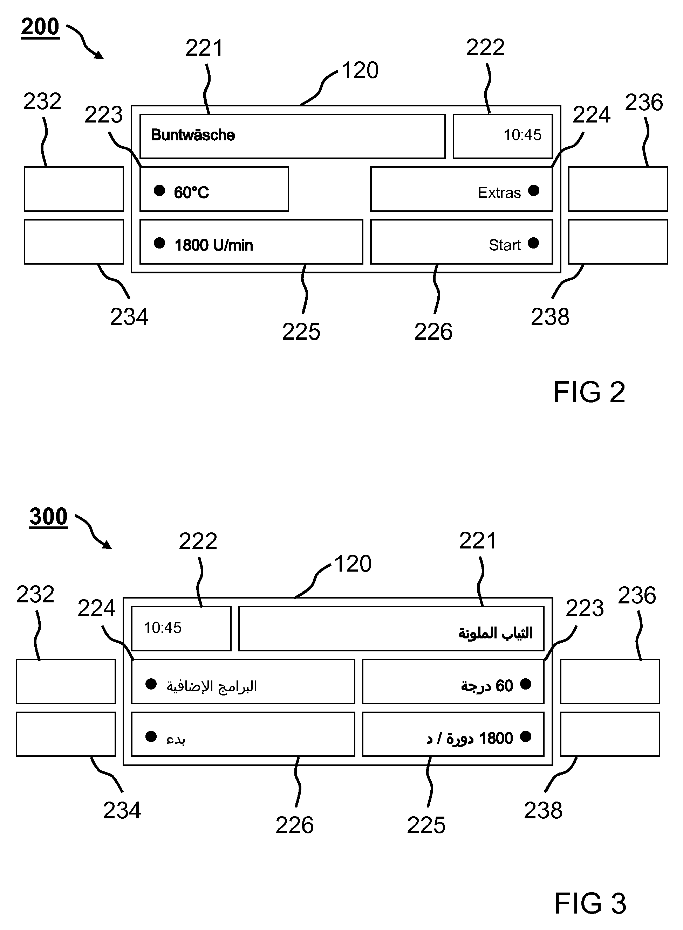

Figur 2 zeigt eine Klartextanzeige 200 eines Haushaltsgerätes gemäß einem Ausführungsbeispiel der vorliegenden Erfindung in einer ersten Sprache. Die erste Sprache ist gemäß dem in Figur 2 gezeigten Ausführungsbeispiel der vorliegenden Erfindung hierbei Deutsch. Bei dem Haushaltsgerät handelt es sich beispielsweise um das in Figur 1 gezeigte Haushaltsgerät oder ein ähnliches Haushaltsgerät. Die Klartextanzeige 200 ist unter Verwendung einer Anzeigeeinrichtung 120 realisiert. Bei der Anzeigeeinrichtung 120 handelt es sich beispielsweise um die in Figur 1 gezeigte Anzeigeeinrichtung.

Auf der Anzeigeeinrichtung 120 sind auf Anzeigedaten basierende Anzeigeinhalte in einer Mehrzahl von Anzeigebereichen 221, 222, 223, 224, 225, 226 angezeigt. Hierbei gilt für Klartext-Anzeigeinhalte sowie für eine Abfolge der Anzeigebereiche 221, 222, 223, 224, 225, 226 eine der Sprache und dem zugehörigen Schriftsystem entsprechende Leserichtung. Die Leserichtung für die Klartextanzeige 200 in der ersten Sprache ist hierbei von links nach rechts. Dabei können Positionen der Anzeigebereiche 221, 222, 223, 224, 225, 226 beispielsweise Standardpositionen repräsentieren.

Gemäß dem in Figur 2 gezeigten Ausführungsbeispiel der vorliegenden Erfindung sind entlang beider Schmalseitenkanten der Anzeigeeinrichtung 120 lediglich beispielhaft jeweils zwei Bedienelemente in Gestalt von Tasten 232, 234, 236, 238 angeordnet. Hierbei ist eine erste Taste 232 funktional mit einem dritten Anzeigebereich 223 verknüpft und eine zweite Taste 234 funktional mit einem fünften Anzeigebereich 225 verknüpft. Ferner ist eine dritte Taste 236 funktional mit einem vierten Anzeigebereich 224 und eine vierte Taste 238 funktional mit einem sechsten Anzeigebereich 226 verknüpft.

Figur 3 zeigt eine Klartextanzeige 300 eines Haushaltsgerätes gemäß einem Ausführungsbeispiel der vorliegenden Erfindung in einer zweiten Sprache. Die zweite Sprache ist gemäß dem in Figur 3 gezeigten Ausführungsbeispiel der vorliegenden Erfindung hierbei Arabisch. Bei dem Haushaltsgerät handelt es sich beispielsweise um das in Figur 1 gezeigte Haushaltsgerät oder ein ähnliches Haushaltsgerät. Die Klartextanzeige 200 ist unter Verwendung einer Anzeigeeinrichtung 120 realisiert. Bei der Anzeigeeinrichtung 120 handelt es sich beispielsweise um die in Figur 1 gezeigte Anzeigeeinrichtung oder eine ähnliche Anzeigeeinrichtung. Genau gesagt ist die Klartextanzeige 200 auch unter Verwendung der Vorrichtung bzw. Ansteuervorrichtung aus Figur 1 oder einer ähnlichen Vorrichtung realisiert.

Auf der Anzeigeeinrichtung 120 sind auf Anzeigedaten basierende Anzeigeinhalte in einer Mehrzahl von Anzeigebereichen 221, 222, 223, 224, 225, 226 angezeigt. Hierbei gilt für Klartext-Anzeigeinhalte sowie für eine Abfolge der Anzeigebereiche 221, 222, 223, 224, 225, 226 eine der Sprache und dem zugehörigen Schriftsystem entsprechende Leserichtung. Die Leserichtung für die Klartextanzeige 200 in der zweiten Sprache ist hierbei von rechts nach links. Dabei können Positionen der Anzeigebereiche 221, 222, 223, 224, 225, 226 beispielsweise gespiegelte Positionen bezüglich der Positionen aus Figur 2 repräsentieren.

Gemäß dem in Figur 3 gezeigten Ausführungsbeispiel der vorliegenden Erfindung sind entlang beider Schmalseitenkanten der Anzeigeeinrichtung 120 lediglich beispielhaft jeweils zwei Bedienelemente in Gestalt von Tasten 232, 234, 236, 238 angeordnet. Hierbei ist eine erste Taste 232 funktional mit einem vierten Anzeigebereich 224 verknüpft, wobei eine zweite Taste 234 funktional mit einem sechsten Anzeigebereich 226 verknüpft ist. Ferner ist eine dritte Taste 236 funktional mit einem dritten Anzeigebereich 223 verknüpft, wobei eine vierte Taste 238 funktional mit einem fünften Anzeigebereich 225 verknüpft ist.

Die Klartextanzeige 300 entspricht hierbei der in Figur 2 gezeigten Klartextanzeige mit Ausnahme der Sprache und der Positionen der Anzeigebereiche 221, 222, 223, 224, 225, 226 sowie deren funktionaler Verknüpfung mit den Tasten 232, 234, 236, 238.

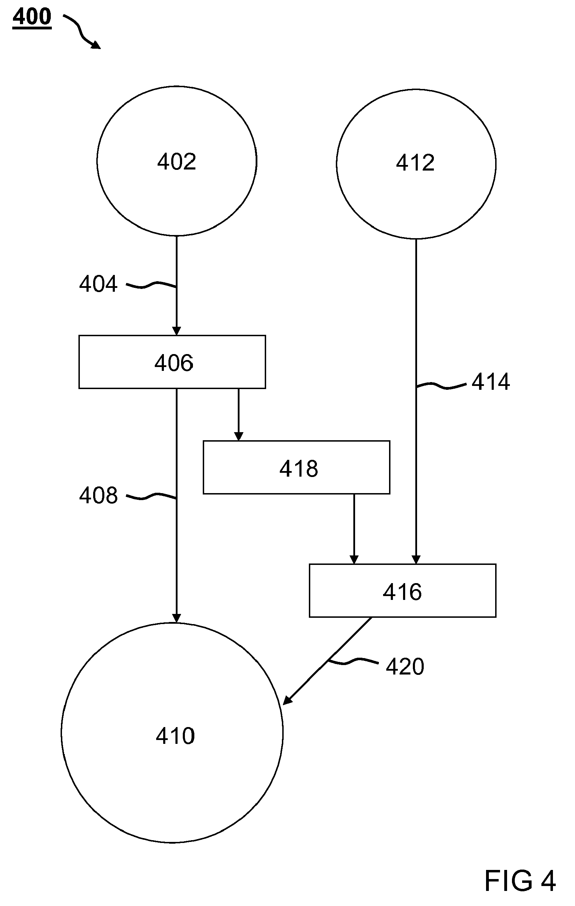

Figur 4 zeigt ein Ablaufschema eines Vorverarbeitungsprozesses 400 gemäß einem Ausführungsbeispiel der vorliegenden Erfindung. Der Vorverarbeitungsprozess 400 ist hierbei insbesondere im Rahmen einer Ausführung des in Figur 6 gezeigten Verfahrens zum Bereitstellen ausführbar.

Ausgehend von einem Block 402, der Texte oder Textdaten repräsentiert, werden bei dem Vorverarbeitungsprozess 400 zunächst erfasste Texte 404 oder Textdaten einem Block 406 zugeführt, in dem eine Vorverarbeitung der erfassten Texte 404 erfolgt. Dabei wird in dem Block 406 eine Vorverarbeitung bezüglich einer bidirektionalen Darstellung, einer umgebungsabhängigen Ausformung und/oder einer Ausbildung kombinierter Zeichen und Ligaturen durchgeführt. Von dem Block 406 ausgehend werden vorverarbeitete Texte 408 oder Textdaten an einen Block 410 übertragen, der eine Geräte-Software, einen Mikrocontroller, einen Speicher bzw. eine Speichereinrichtung, eine Anzeigeeinrichtung bzw. ein Display oder dergleichen repräsentiert.

Parallel dazu wird bei dem Vorverarbeitungsprozess 400 ausgehend von einem Block 412, der einen Zeichensatz repräsentiert, ein gesamter Zeichenvorrat 414 einem Block 416 zugeführt, in dem eine Filterung des gesamten Zeichenvorrates 414 durchgeführt wird, um eine Teilmenge 420 von Zeichen, ein sogenanntes Zeichen-Subset, zu erzeugen. Zwischen den Block 406 der Vorverarbeitung und den Block 416 der Filterung ist bei dem Vorverarbeitungsprozess 400 ein Block 418 geschaltet, in dem eine Analyse durchgeführt wird.

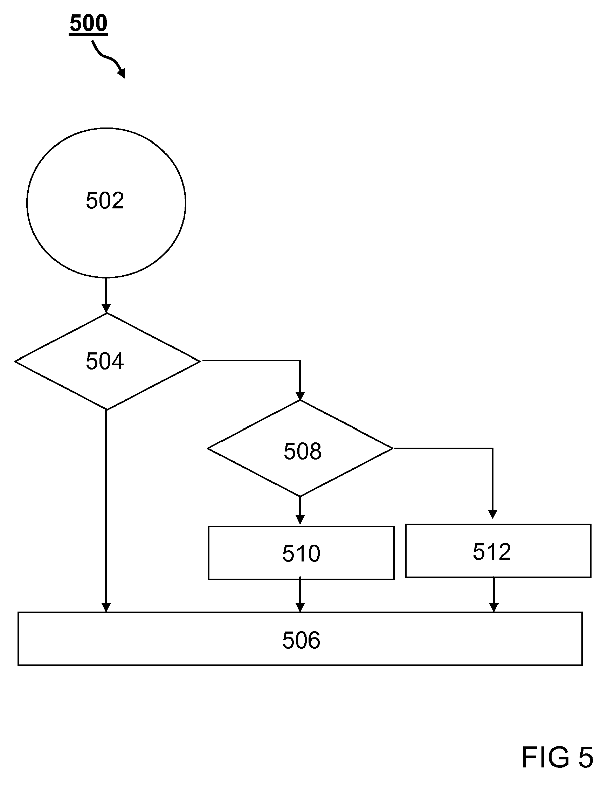

Figur 5 zeigt ein Ablaufschema eines Anzeigevorbereitungsprozesses 500 gemäß einem Ausführungsbeispiel der vorliegenden Erfindung. Der Anzeigevorbereitungsprozess 500 ist hierbei insbesondere im Rahmen einer Ausführung des in Figur 7 gezeigten Verfahrens zum Ansteuern ausführbar.

Bei dem Anzeigevorbereitungsprozess 500 erfolgt nach einem Block 502, der eine Bildschirmdefinition mit einer Leserichtung von links nach rechts (L->R) repräsentiert, in einem Block 504 eine Überprüfung dahin gehend, ob für eine anzuzeigende Sprache bzw. der am Gerät ausgewählten Sprache von Anzeigedaten oder Anzeigeinhalten eine Leserichtung von rechts nach links (R->L) erforderlich ist. Falls dem nicht so ist, d. h., falls die Leserichtung von links nach rechts aus dem Block 502 beibehalten werden kann, so geht der Anzeigevorbereitungsprozess 500 zu einem Block 506 über, der eine Bildschirm-Ausgabe repräsentiert.

Falls die Überprüfung in dem Block 504 ergibt, dass für die anzuzeigende Sprache von Anzeigedaten oder Anzeigeinhalten eine Leserichtung von rechts nach links erforderlich ist, geht der Anzeigevorbereitungsprozess 500 entweder zu einem Block 510, in dem eine Verarbeitungsvorschrift oder Rechenvorschrift zur Spiegelung angewandt wird, und anschließend zu dem Block 506 der Bildschirm-Ausgabe über oder gehr zu einem Block 512, dem eine Sonderbehandlung durchgeführt wird, und anschließend zu dem Block 506 der Bildschirm-Ausgabe über.

Figur 6 zeigt ein Ablaufdiagramm eines Verfahrens 600 zum Bereitstellen gemäß einem Ausführungsbeispiel der vorliegenden Erfindung. Das Verfahren 600 ist ausführbar, um von Anzeigedaten zum Anzeigen von Klartext in mehreren Sprachen und Schriftsystemen mittels einer Anzeigeeinrichtung eines Haushaltsgerätes bereitzustellen. Dabei ist das Verfahren 600 in Verbindung mit einem Hausgerät wie dem Hausgerät aus Figur 1 ausführbar. Die durch Ausführen des Verfahrens 600 bereitgestellten Anzeigedaten sind durch eine Vorrichtung wie die Vorrichtung aus Figur 1 verwendbar.

Das Verfahren 600 zum Bereitstellen weist einen Schritt 610 des Vorverarbeitens anzuzeigender Textdaten bezüglich zumindest einer sprachabhängigen und schriftsystemabhängigen Darstellungseigenschaft auf, um vorverarbeitete Textdaten zu erzeugen. Auch weist das Verfahren 600 einen Schritt 620 des Filterns eines Zeichensatzes in Abhängigkeit von den vorverarbeiteten Textdaten auf, um einen Zeichenvorrat auf eine zum Anzeigen der vorverarbeiteten Textdaten ausreichende Teilmenge des Zeichenvorrats zu reduzieren. In einem nachfolgenden Schritt 630 des Übertragens werden die im Schritt 610 des Vorverarbeitens vorverarbeiteten Textdaten und die im Schritt 620 des Filterns gefilterte Teilmenge des Zeichenvorrats als Anzeigedaten an eine Speichereinrichtung des Haushaltsgerätes übertragen.

Gemäß einem Ausführungsbeispiel werden die anzuzeigenden Textdaten im Schritt 610 des Vorverarbeitens bezüglich einer bidirektionalen Darstellung, bezüglich einer umgebungsabhängigen Ausformung und/oder bezüglich einer Ausbildung kombinierter Zeichen und Ligaturen untersucht. Optional weist das Verfahren 600 einen Schritt 640 des Analysierens der vorverarbeiteten Textdaten auf, um zumindest eine Filterregel zum Filtern des Zeichensatzes zu bestimmen. Dabei ist der Schritt 640 des Analysierens zwischen dem Schritt 610 des Vorverarbeitens und dem Schritt 620 des Filterns ausführbar.

Figur 7 zeigt ein Ablaufdiagramm eines Verfahrens 700 zum Ansteuern gemäß einem Ausführungsbeispiel der vorliegenden Erfindung. Das Verfahren 600 ist ausführbar, um eine Anzeigeeinrichtung eines Haushaltsgerätes zum Anzeigen von Klartext in mehreren Sprachen und Schriftsystemen anzusteuern. Dabei ist das Verfahren 700 in Verbindung mit einem Hausgerät wie dem Hausgerät aus Figur 1, einer Vorrichtung wie der Vorrichtung aus Figur 1 und/oder einer Anzeigeeinrichtung wie der Anzeigeeinrichtung aus Figur 1 bis 3 ausführbar. Bei einer Ausführung des Verfahrens 700 zum Ansteuern werden durch Ausführen des in Figur 6 gezeigten Verfahrens zum Bereitstellen bereitgestellte Anzeigedaten verwendet.

Das Verfahren 700 zum Ansteuern weist einen Schritt 710 des Empfangens eines Sprachsignals auf, das eine anzuzeigende Sprache für die Anzeigedaten repräsentiert. Auch weist das Verfahren 700 zum Ansteuern einen Schritt 720 des Einlesens von Anzeigedaten auf. Hierbei repräsentieren die eingelesenen Anzeigedaten gemäß dem Verfahren aus Figur 6 bereitgestellte Anzeigedaten. In einem nachfolgenden Schritt 730 des Generierens wird ansprechend auf das Sprachsignal unter Verwendung der Anzeigedaten abhängig von sprachabhängigen und schriftsystemabhängigen Positionen von Anzeigeinhalten ein Anzeigedatensatz generiert. In einem weiteren Schritt 740 des Ausgebens wird der generierte Anzeigedatensatz an eine Schnittstelle zu der Anzeigeeinrichtung ausgegeben, um die Anzeigeeinrichtung anzusteuern.

Gemäß einem Ausführungsbeispiel können die sprachabhängigen und schriftsystemabhängigen Positionen von Anzeigeinhalten im Schritt 730 des Generierens unter Verwendung einer Verarbeitungsvorschrift ermittelt werden, die abhängig von einer dem Sprachsignal zugeordneten Attributsinformation anwendbar ist. Zusätzlich oder alternativ kann abhängig von dem Sprachsignal optional im Schritt 730 des Generierens eine Leserichtung für Anzeigeinhalte festgestellt werden. Hierbei können die sprachabhängigen und schriftsystemabhängigen Positionen von Anzeigeinhalten abhängig von der Leserichtung als Vorgabepositionen, gespiegelte Positionen und/oder Sonderpositionen ermittelt werden.

Unter Bezugnahme auf die Figuren 1 bis 7 wird nachfolgend auf Grundlagen sowie Ausführungsbeispiele der vorliegenden Erfindung nochmals zusammenfassend und mit anderen Worten eingegangen.

Haushaltsgeräte 100 mit Klartext-Anzeigen für Länder, die sich komplexer Schriftsysteme bedienen, z. B. Leserichtung von rechts nach links, werden somit verfügbar und bieten dem Nutzer eine echte Sprachenvielfalt nicht nur auf Basis europäischer Sprachen, z. B. Englisch, an. Komplexe Schriftsysteme sind z. B. die arabische und die hebräische Schrift; eine Komplexität bei Verarbeitung und Anzeige solcher Schriften ergibt sich z. B. aus der Leserichtung von rechts nach links oder aus speziellen Anforderungen zur Zeichenverarbeitung bzw. Zeichenersetzung.

Somit ist für Haushaltsgeräte 100 durch die Verfahren 600 und/oder 700 bzw. die Vorrichtung 110 insbesondere auch eine Klartext-Bedienung in beispielsweise arabischer oder hebräischer Sprache möglich. Eine andere Art der Verarbeitung komplexer Schriftsysteme kann einen Algorithmus umfassen, der richtige Zeichen auswählt und eine Ausgabe entsprechend formatiert. Im Vergleich zu einer solchen Lösung sind die genannten Ausführungsbeispiele weniger speicherintensiv und daher auf eingebettete Systeme ohne Weiteres übertragbar.

Es kann unter Verwendung bzw. bei Anwendung von Ausführungsbeispielen der vorliegenden Erfindung vermieden werden, dass ein Zeichensatz mit allen im Alphabet enthaltenen Zeichen 412, 414 in eine eingebettete Software oder sogenannte embedded-Software integriert zu werden braucht und dass in die jeweilige Sprache übersetzte Texte und zur Verarbeitung der Schriften ein entsprechender komplexer Algorithmus vorzusehen sind. Somit kann verhindert werden, dass zusätzliche Daten, die z. B. einen alternativen Bildschirmaufbau für eine Sprache mit Leserichtung von rechts nach links beschreiben, einen Speicher zusätzlich belasten. Dadurch kann insbesondere ein erforderlicher Speicherbedarf auf einem embedded-System gesenkt werden und kann eine Integration komplexer Schriftsysteme in Haushaltsgeräte 100 realisiert werden, wobei weder auf eine zur Verfügung stehende Sprachenvielfalt noch auf andere Funktionen verzichtet zu werden braucht.

Gemäß einem Ausführungsbeispiel der vorliegenden Erfindung werden beispielsweise Texte 402, 404 und Zeichensatz 412, 414 vorverarbeitet, um den Speicher zu entlasten und um eine Integration eines komplexen und speicherintensiven Algorithmus zu vermeiden. Ferner wird zur Vermeidung von zusätzlichen Daten, die einen alternativen Bildschirmaufbau für eine Sprache mit Leserichtung von rechts nach links beschreiben, insbesondere eine Verarbeitungsvorschrift 510 bzw. Rechenvorschrift integriert, welche eine Spiegelung von Bildschirm-Daten der Standardsprachen mit Leserichtung von links nach rechts ermöglicht.

Im Einzelnen werden in eine Übersetzungssprache übersetzte Texte 404 bezüglich bidirektionaler Darstellung (bidirectional rendering), umgebungsabhängiger Ausformung (contextual shaping) und/oder Ausbildung kombinierter Zeichen und Ligaturen (combined characters and ligatures) durch ein entsprechendes Verfahren 400, 600 oder Werkzeug vorverarbeitet und die vorverarbeiteten Textdaten 408 in die Geräte-Software 410 übernommen; eine Integration eines entsprechend komplexen Algorithmus entfällt damit.

Auf Basis der vorverarbeiteten Texte 408 wird durch eine Analyse 418 ein Zeichen-Subset 420 aus dem Zeichensatz 412, 414 zur Integration in die Geräte-Software 410 bereitgestellt. Dabei wird ein Zeichenvolumen auf die tatsächlich erforderlichen Zeichen 420 begrenzt, mit dem Vorteil eines reduzierten Speicherbedarfs.

Anstelle eines alternativen Datensatzes, der zusätzlich zu Daten zur Beschreibung von Bildschirm-Anordnungen für Standardsprachen mit Leserichtung von links nach rechts auch Definitionen für eine Anordnung für Sprachen mit Leserichtung von rechts nach links enthält, wird eine Verarbeitungsvorschrift 510 bzw. Rechenvorschrift integriert, mittels derer Positionen einzelner Bildschirminhalte 221, 222, 223, 224, 225, 226, wie Texte, Symbole, Grafiken etc., bestimmt bzw. errechnet werden können, mit dem Vorteil eines reduzierten Speicherbedarfs.

Jede Bildschirmanordnung bzw. jeder sogenannte Screen kann mit einem Attribut versehen sein oder werden, das eine Anwendung der Verarbeitungsvorschrift 510 zur Spiegelung der Anordnung sowie gegebenenfalls einer zugehörigen Interaktionsbeziehung aktiviert oder deaktiviert. Hierdurch kann eine gezielte und speicherschonende Behandlung 512 von Ausnahmen ermöglicht werden.

## Patentansprüche

1. Verfahren (600) zum Bereitstellen von Anzeigedaten zum Anzeigen von Klartext in mehreren Sprachen und Schriftsystemen mittels einer Anzeigeeinrichtung (120) eines Haushaltsgerätes, wobei das Verfahren (600) folgende Schritte aufweist:
Vorverarbeiten (406; 610) anzuzeigender Textdaten (402, 404) bezüglich zumindest einer sprachabhängigen und schriftsystemabhängigen Darstellungseigenschaft, um vorverarbeitete Textdaten (408) zu erzeugen;
Filtern (416; 620) eines Zeichensatzes (412) in Abhängigkeit von den vorverarbeiteten Textdaten (408), um einen Zeichenvorrat (414) auf eine zum Anzeigen der vorverarbeiteten Textdaten (408) ausreichende Teilmenge (420) des Zeichenvorrats zu reduzieren; und
Übertragen (630) der vorverarbeiteten Textdaten (408) und der Teilmenge (420) des Zeichenvorrats als Anzeigedaten an eine Speichereinrichtung des Haushaltsgerätes (100).

2. Verfahren (600) gemäß Anspruch 1, bei dem im Schritt (406; 610) des Vorverarbeitens die anzuzeigenden Textdaten (402, 404) bezüglich einer bidirektionalen Darstellung, einer umgebungsabhängigen Ausformung und/oder einer Ausbildung kombinierter Zeichen und Ligaturen untersucht werden.

3. Verfahren (600) gemäß einem der vorangegangenen Ansprüche, mit einem Schritt (418; 640) des Analysierens der vorverarbeiteten Textdaten (408), um zumindest eine Filterregel zum Filtern des Zeichensatzes zu bestimmen.

4. Verfahren (700) zum Ansteuern einer Anzeigeeinrichtung (120) eines Haushaltsgerätes (100) zum Anzeigen von Klartext in mehreren Sprachen und Schriftsystemen, wobei das Verfahren (700) folgende Schritte aufweist:
Empfangen (710) eines Sprachsignals, das eine anzuzeigende Sprache für die Anzeigedaten repräsentiert;
Einlesen (720) von Anzeigedaten, die gemäß dem Verfahren (600) nach einem der vorangegangenen Ansprüche bereitgestellte Anzeigedaten repräsentieren;
Generieren (500; 730) eines Anzeigedatensatzes unter Verwendung der Anzeigedaten in Abhängigkeit von sprachabhängigen und schriftsystemabhängigen Positionen (221, 222, 223, 224, 225, 226) von Anzeigeinhalten ansprechend auf das Sprachsignal; und
Ausgeben (740) des generierten Anzeigedatensatzes an eine Schnittstelle zu der Anzeigeeinrichtung (120), um die Anzeigeeinrichtung (120) anzusteuern.

5. Verfahren (700) gemäß Anspruch 4, bei dem im Schritt (500; 730) des Generierens die sprachabhängigen und schriftsystemabhängigen Positionen (221, 222, 223, 224, 225, 226) von Anzeigeinhalten unter Verwendung einer Verarbeitungsvorschrift (510) ermittelt werden, die abhängig von einer dem Sprachsignal zugeordneten Attributsinformation anwendbar ist.

6. Verfahren (700) gemäß einem der Ansprüche 4 bis 5, bei dem im Schritt (500; 730) des Generierens abhängig von dem Sprachsignal eine Leserichtung für Anzeigeinhalte festgestellt wird, wobei die sprachabhängigen und schriftsystemabhängigen Positionen (221, 222, 223, 224, 225, 226) von Anzeigeinhalten abhängig von der Leserichtung als Vorgabepositionen, gespiegelte Positionen und/oder Sonderpositionen ermittelt werden.

7. Vorrichtung (110), die eingerichtet ist, das Verfahren (600; 700) gemäß einem der vorangegangenen Ansprüche auszuführen.

8. Haushaltsgerät (100), das eine Anzeigeeinrichtung (120) zum Anzeigen von Klartext in mehreren Sprachen und Schriftsystemen und eine Vorrichtung (110) gemäß einem der vorangegangenen Ansprüche aufweist, wobei die Anzeigeeinrichtung (120) und die Vorrichtung (110) datenübertragungsfähig miteinander verbunden sind.

9. Computer-Programmprodukt mit Programmcode zur Durchführung des Verfahrens nach einem der vorangegangenen Ansprüche, wenn das Computer-Programmprodukt auf einer Vorrichtung ausgeführt wird.
